# FASCICULE DE BREVET EUROPEEN

(11) **EP 2 576 108 B1**
(45) Date de publication et mention de la délivrance du brevet: **28.09.2016**
(21) Numéro de dépôt: 11728363.0
(22) Date de dépôt: 07.06.2011
(51) Int. Cl.: B23B 29/034, B23Q 1/28, B23Q 11/10

(54) **OUTIL A ALÉSER SUR SEMELLE**
AUSDREHKOPF AUF EINEM BALKEN
REAMING TOOL ON BAR

(30) Priorité: 07.06.2010 FR 1054461
(43) Date de publication de la demande: 10.04.2013
(73) Titulaire: SECO-E.P.B. (Société par Actions Simplifiées), 67330 Bouxwiller (FR)
(72) Inventeur: FREYERMUTH, Alain, F-67350 Pfaffenhoffen (FR); SCHMITT, Michel, F-67310 Balbronn (FR); JAEGER, Claude, F-67700 Monswiller (FR); OCHS, Fabrice, F-67700 Monswiller (FR)
(74) Mandataire: Nuss, Laurent
(86) Numéro de dépôt international: PCT/FR2011/051280
(87) Numéro de publication internationale: WO 2011/154649

(56) Documents cités:
- EP-A1- 0 804 984
- DE-B- 1 103 112
- FR-A1- 2 194 508
- FR-A1- 2 563 132
- FR-A5- 2 117 330
- US-A- 4 547 103
- Seco Tools: "Catalog: MN 2008 Holemaking", 31 décembre 2008 (2008-12-31), XP002617146, pages 324-337, pages 324-337

## Description

La présente invention concerne le domaine des accessoires des machines-outils, à commande numérique, centres d'usinage, cellules et ateliers flexibles et a pour objet un outil à aléser sur semelle pour la réalisation de trous précis de grand diamètre dans des pièces monolithiques de grandes dimensions présentant des caractéristiques géométriques très rigoureuses, au moyen d'outils à aléser interchangeables.

Elle concerne plus particulièrement un outil à aléser sur semelle selon le préambule de la revendication 1. Un tel outil est connu du document FR 2 194 508 A1.

On connaît actuellement des dispositifs permettant d'ajuster le diamètre choisi, mais dans lesquels apparaît obligatoirement un déséquilibre de masse qui conduit à un balourd lors de l'opération d'alésage, ce balourd étant d'autant plus sensible que les vitesses de rotation augmentent. Or, les machines modernes et les nouveaux matériaux utilisés permettent généralement des vitesses de coupes élevées.

A cet effet, les têtes à aléser connues de ce type sont généralement équipées de deux outils ou d'un outil et d'un contrepoids montés de manière diamétralement opposés sur une semelle d'entraînement, avec possibilité de réglage en position sur cette dernière par coulissement dans une glissière correspondante, puis serrage dans cette glissière par pincement.

La précision lors du réglage est donc très importante pour ce type de porte-outils et il est également indispensable d'éviter toute dispersion lors du blocage final. En outre, il est nécessaire d'assurer le maintien du ou des porte-outils sur la semelle, pour tenir compte de l'augmentation continue des vitesses de rotation, en relation avec l'évolution des progrès technologiques, qui entraîne une augmentation correspondantes des forces centrifuges s'exerçant sur les porte-outils et, en corollaire, un risque de désolidarisation correspondant entre la semelle et le ou les porte-outils, par exemple du fait d'un serrage insuffisant.

Par ailleurs, les plaquettes de coupe mises en oeuvre sur les outils équipant ces porte-outils sont généralement lubrifiées par l'intermédiaire de dispositifs de lubrification, communément appelés tours de lubrification, qui sont disposés à distance de la zone de coupe. Or, du fait de l'augmentation de la vitesse de coupe, le jet de lubrifiant de coupe est dévié de la zone de coupe, de sorte qu'il perd totalement son efficacité.

La présente invention a pour but de pallier ces inconvénients en proposant un outil à aléser sur semelle selon la revendication 1, et permettant une solidarisation préalable entre la semelle et le ou les porte-outils et/ou un contrepoids, tout en autorisant le réglage de position du ou des porte-outils ou contrepoids avant leur serrage définitif sur la semelle, ainsi qu'une lubrification efficace de la ou des arêtes de coupe.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un outil à aléser sur semelle conforme à l'invention ;
la figure 2 est une vue partielle en élévation latérale représentant le dispositif de limitation de la course du porte-outils ;
la figure 3 est une vue en élévation frontale, à plus grande échelle du porte-outils ;
la figure 4 est une vue en élévation latérale et en coupe suivant A-A de la figure 3 ;
la figure 5 est une vue partielle en coupe à plus grande échelle représentant l'ergot éclipsable en relation avec le dispositif de réglage de position du porte-outils ;
la figure 6 est une vue en plan et partiellement en coupe de la semelle au niveau de l'ensemble de guidage et de blocage de la glissière de guidage et de maintien de la semelle de fixation et,

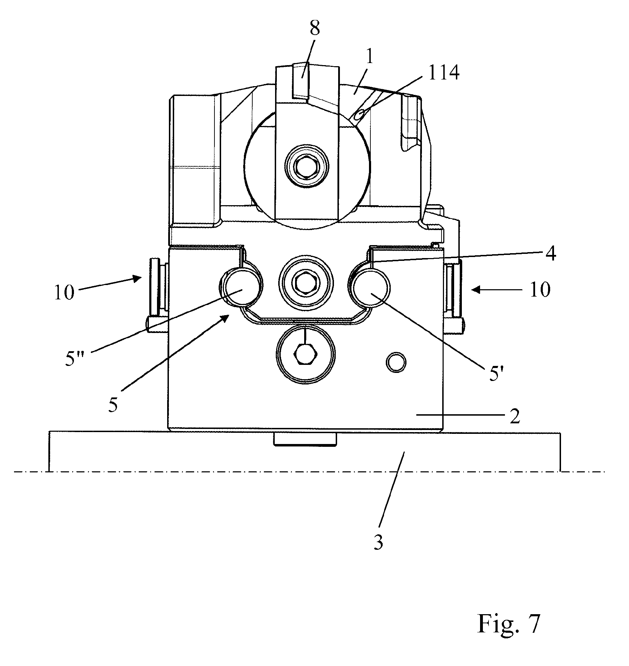

la figure 7 est une vue partielle en élévation frontale du montage du porte-outil sur la semelle.

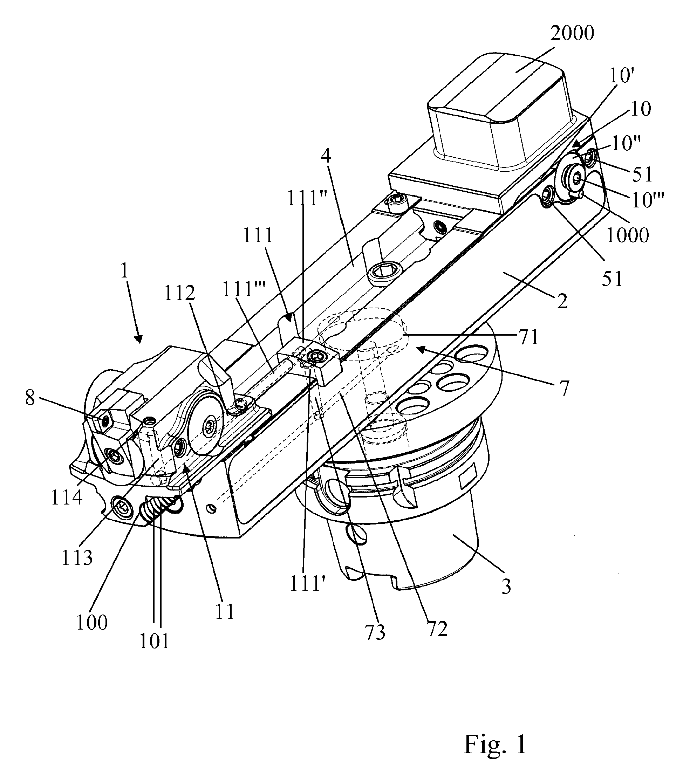

La figure 1 des dessins annexés représente, à titre d'exemple, un outil à aléser sur semelle, qui est constitué par au moins un porte-outils 1 et par une semelle 2 de fixation sur une broche 3 de machine. Cette semelle 2 est munie, d'une part, d'une glissière 4 de guidage et de maintien pour au moins un porte-outils 1, perpendiculairement à l'axe de ladite broche 3, par l'intermédiaire d'un ensemble 5 de guidage et de blocage et, d'autre part, d'au moins un ergot 6 de positionnement d'un porte-outils 1 ou d'un contrepoids 2000. La semelle 2 comporte, en outre, un moyen 7 de lubrification centralisée de la ou des arêtes de coupe 8 du ou des porte-outils 1 montés sur ladite semelle 2.

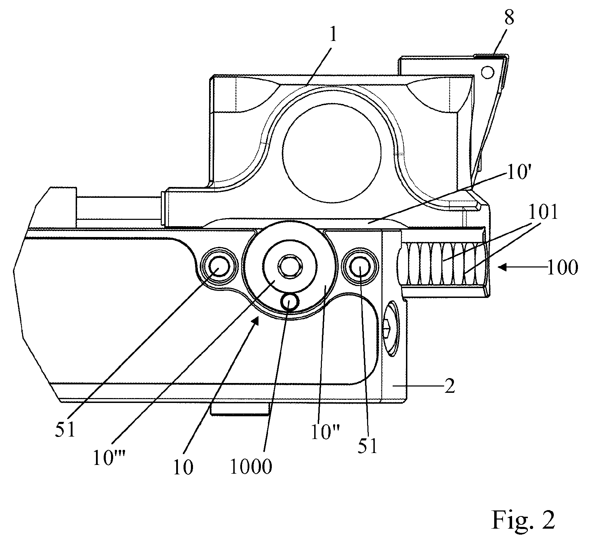

L'ensemble 5 de guidage et de blocage de la glissière 4 de guidage et de maintien pour au moins un porte-outils 1 et un contrepoids 2000 est constitué par une pige fixe 5' serrée dans un logement longitudinal correspondant d'une paroi latérale de la glissière 4 et par une pige mobile 5" montée, de manière déplaçable par l'intermédiaire de vis 51, dans un logement opposé à celui de réception de la pige fixe 5' (figures 1, 2 et 6). Ainsi, le serrage des vis 51 réalise un déplacement de la pige mobile 5" en direction de la pige fixe 5'. De manière connue, le porte-outils 1 est pourvu de moyens de guidage 100, destinés à coopérer avec les piges fixes 5' et mobiles 5", pour le déplacement dudit porte-outils 1 dans la semelle 2 et pour son blocage en position.

Par serrage des vis 51, la pige mobile 5" réalise une pression sur les moyens de guidage 100 correspondants du porte-outils 1 et ainsi un blocage de ce dernier dans la glissière 4 par serrage en coopération avec la pige fixe 5'. Ainsi sont réalisés un guidage et une liaison en translation similaires à ceux d'un dispositif de guidage à queue d'aronde, la retenue radiale résistante à la force centrifuge étant obtenu par pincement du moyen 100 dudit porte-outils 1 dans la glissière 4 comportant les piges 5' et 5" de la semelle 2. Le montage de la pige mobile 5" est de type connu et consiste simplement en une fixation de ladite pige à l'intérieur de la glissière 4 par l'intermédiaire de vis noyées dans ladite pige 5", qui est montée sur lesdites vis contre l'action de ressorts tendant à l'appliquer contre la paroi interne correspondante de la glissière 4.

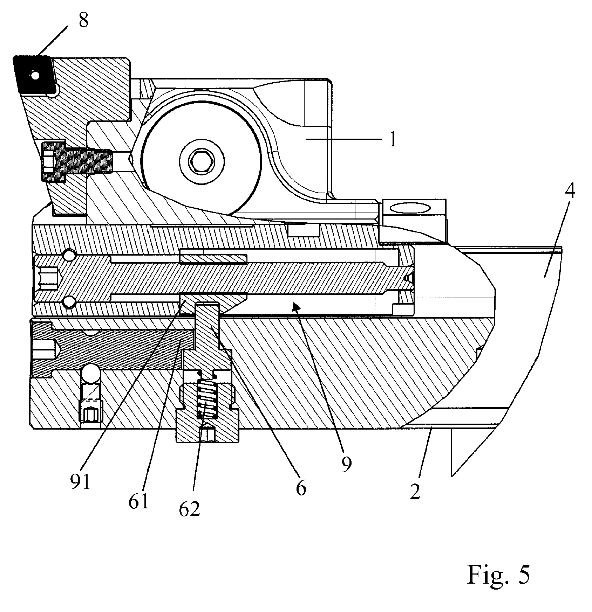

Par ailleurs, l'ergot 6 de positionnement d'un porte-outils 1 ou d'un contrepoids 2000 est logé dans le fond de la glissière 4 de la semelle 2 et est manoeuvrable par l'intermédiaire d'un axe rotatif 60 muni d'une came 61 de déplacement de cet ergot 6 (figure 5). Cet ergot 6 est destiné à coopérer avec un dispositif 9 de réglage précis du porte-outils 1, logé dans le fond de ce porte-outils 1 au niveau des moyens de guidage 100 correspondants du porte-outils 1 et en particulier avec un écrou 91 de ce dernier.

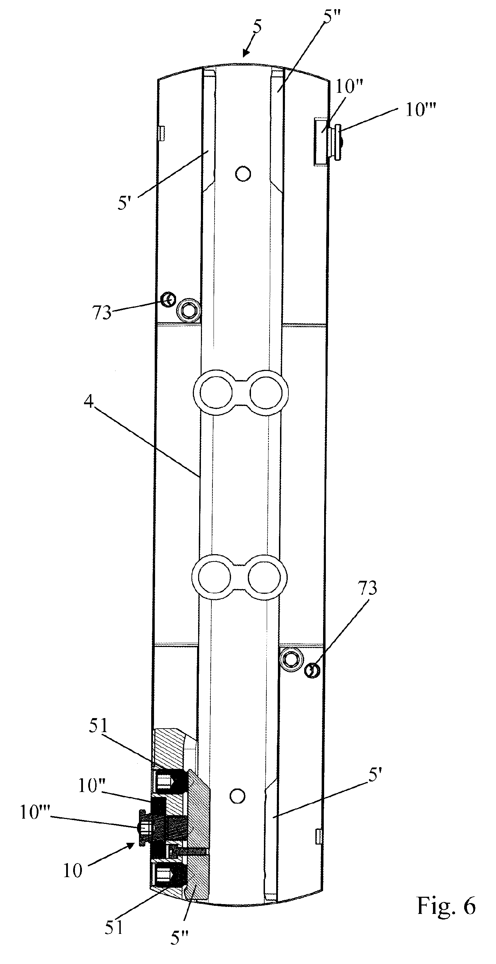

Enfin, le moyen 7 de lubrification centralisée de la ou des arêtes de coupe 8 du ou des porte-outils 1 logé dans la semelle 2 est constitué par un perçage central 71 d'arrivée de lubrifiant relié à des conduits tangentiels 72 s'étendant dans la semelle 2, parallèlement à ses bords longitudinaux et débouchant dans des conduits perpendiculaires 73 (figures 1 et 6).

Un outil à aléser sur semelle n'étant généralement équipé que d'un seul porte-outils 1 et d'un contrepoids 2000, la description qui suit ne fera toujours référence qu'à un seul porte-outils 1.

Par ailleurs, il apparaît clairement sur les dessins que la semelle 2 est parfaitement symétrique en rotation de 180° par rapport à l'axe du perçage central 71 du moyen 7 de lubrification centralisée. Les dispositifs décrits en relation avec le porte-outils sont donc parfaitement identiques que celui-ci soit monté à droite ou à gauche par rapport à la disposition de la figure 1.

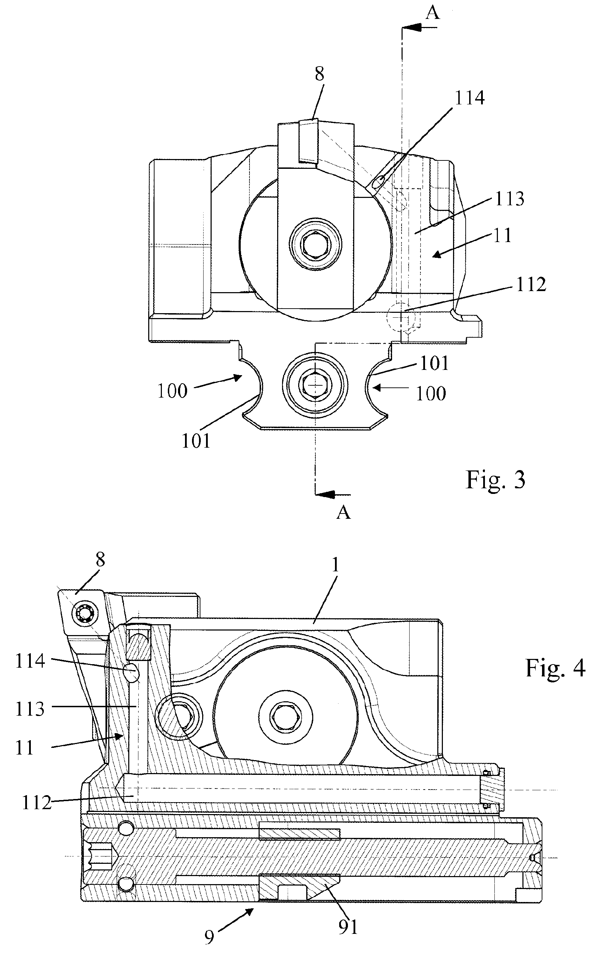

Conformément à l'invention, le porte-outils 1 est muni de moyens d'agrippage 101 destinés à coopérer avec l'ensemble 5 de guidage et de blocage de la glissière 4 de guidage et de maintien de la semelle de fixation 2, qui est pourvue, en outre, d'un dispositif 10 de limitation de la course du porte-outils 1 ou du contrepoids 2000 (figures 1 à 3). En outre, l'ergot 6 de positionnement d'un porte-outils 1 ou d'un contrepoids 2000 est éclipsable lors de la mise en place d'un porte-outils 1 ou d'un contrepoids 2000 et revient automatiquement en position après cette mise en place et chaque porte-outils 1 est muni d'un dispositif 11 de lubrification de l'arête de coupe 8 de l'outil, relié au moyen 7 de lubrification centralisée de la semelle 2 (figure 5).

Les moyens d'agrippage 101 du porte-outils consistent avantageusement en des striures ou analogue en saillie par rapport à la forme générale des moyens de guidage 100 prévus sur le porte-outils 1 (figures 1 à 3). De préférence, le matériau constitutif des moyens de guidage 100 du porte-outils 1, et donc les striures formant les moyens d'agrippage 101, est un matériau présentant une dureté supérieure à celle du matériau constitutif des piges fixe 5' et mobile 5" formant l'ensemble 5 de guidage et de blocage de la glissière 4.

Il en résulte que la surface de contact entre les moyens de guidage 100 et l'ensemble 5 est diminuée et réduite à une multitude de contacts linéaires, de sorte que du fait de la dureté supérieure des moyens d'agrippage 101, les striures formant ces moyens réalisent une déformation élastique correspondante de la surface des piges 5' et 5" permettant un agrippement améliorant de manière très importante la résistance au glissement par rapport à un contact lisse. En fait, cette résistance au glissement peut être améliorée de près de 50 %. Il en résulte que le blocage du porte-outils 1 dans la semelle 2 est très nettement amélioré, ce qui contribue à un maintien amélioré du porte-outils 1, ainsi que du contrepoids 2000, dans la semelle 2 et donc à une résistance plus élevée aux forces centrifuges générées par les très hautes vitesses de rotation.

Le dispositif 10 de limitation de la course du porte-outils 1 ou du contrepoids 2000 ( figures 1, 2 et 6) consiste, d'une part, en une rainure latérale 10' prévue sur un épaulement latéral du porte-outils 1 s'appuyant sur un bord de la semelle 2 délimitant la glissière 4 et, d'autre part, en une rondelle 10" ou une plaquette fixée dans un logement du côté correspondant de la semelle 2 et présentant une partie en saillie par rapport au bord correspondant d'appui du porte-outils 1, cette partie en saillie coopérant avec la rainure latérale 10'. Ainsi, après insertion du porte-outils 1 dans la semelle 2, il est possible de limiter la course du porte-outils 1 sur la semelle 2 et d'éviter tout risque d'extraction non voulue dudit porte-outils 1, en particulier une éjection, par mise en place de la rondelle 10" dans le logement correspondant prévu sur la semelle 2 et insertion de sa partie supérieure dans la rainure latérale 10' dudit porte-outils 1.

La rondelle 10" ou plaquette est fixée sur la semelle 2 par l'intermédiaire d'une vis 10"'.

De préférence, la rondelle 10" ou plaquette est montée sur une vis 10"' étagée présentant deux filetages inverses ou à pas différentiels et est maintenue contre une rotation par l'intermédiaire d'une goupille 1000. En outre, la vis 10"' agit avantageusement par son extrémité sur la pige mobile 5". Ainsi, lors d'un serrage de la pige mobile 5" en vue du blocage du porte-outils 1, la rondelle 10' ou plaquette est entraînée vers le fond de son logement dans la semelle 2 et sa partie en saillie sur la face d'appui de ladite semelle 2 pénètre dans la rainure 10' dudit porte-outils 1. La rondelle 10" est montée sur le filetage inversé ou le filetage à pas différentiel de la vis 10"' avec prévision d'un décalage initial entre le fond du logement correspondant de la semelle 2 et la paroi correspondante de la rondelle 10" ou de la plaquette de telle manière que le vissage de la vis 10"' dans la semelle 2 s'effectue avec maintien de la rondelle 10" ou de la plaquette par la goupille 1000 pour éviter sa rotation.

Il en résulte que lors du vissage, qui entraîne un déplacement de la tête de vis en direction de la semelle, la rondelle 10" ou la plaquette a tendance à s'éloigner de la face correspondante de la tête de vis, de sorte que lors d'un dévissage, la rondelle 10" ou plaquette sort du logement et libère ainsi totalement le passage du porte-outils 1. Dans le cas de mise en oeuvre de la vis 10"' pour un blocage de la pige mobile 5", les décalages décrits ci-dessus doivent être prévus de telle manière que le serrage définitif de la pige 5" s'effectue avant l'application de la rondelle 10" ou plaquette dans le fond de son logement. En outre, ce montage de la rondelle 10" ou plaquette rend cette dernière indémontable et donc imperdable

L'ergot 6 de positionnement d'un porte-outils 1 ou d'un contrepoids 2000 est monté dans le fond de la glissière 4 de la semelle 2 avec possibilité de déplacement contre l'action d'un ressort de rappel 62 agissant sur la came 61 de déplacement de cet ergot 6. Ainsi, l'ergot 6 reste continuellement en saillie sur le fond de la glissière 4 pour coopérer avec l'écrou 91 du dispositif 9 de réglage précis du porte-outils 1 (figure 5). Il en résulte que, lors de l'insertion du porte-outils 1 sur la semelle 2, il suffit d'encliqueter ledit dispositif 9 sur l'ergot 6 pour réaliser un positionnement préalable et un maintien immédiat du porte-outils 1 dans la semelle 2, de sorte que le montage du porte-outils 1 sur la semelle 2 est immédiatement sécurisé, même si le blocage définitif n'est pas encore effectué. De manière connue, le dispositif 9 de réglage précis du porte-outils 1 est avantageusement pourvu, en vue de son encliquetage, d'une surface biaisée favorisant l'éclipsage de l'ergot 6 en vue de son encliquetage.

Pour le démontage du porte-outils 1, il suffit, bien entendu, comme avec les ergots connus, de manoeuvrer l'ergot 6 dans le sens d'un éclipsage pour libérer le dispositif 9 et ainsi le porte-outils 1. Bien entendu, cette libération du porte-outils 1 ne peut être effectuée qu'après suppression de la limitation de course, à savoir extraction de la rondelle 10" ou de la plaquette hors de la rainure 10' du porte-outils 1. Ainsi, une éjection accidentelle du porte-outils 1 peut être totalement évitée, le porte-outils 1 étant continuellement maintenu contre une telle éjection, dès sa mise en place sur la semelle 2.

Le dispositif 9 de réglage précis du porte-outils 1, logé dans le fond de ce porte-outils 1 au niveau des moyens de guidage 100 correspondants du porte-outils 1, est de type connu en soi et ne nécessite pas de description particulière, n'étant en lui-même pas l'objet de la présente invention.

Le dispositif 11 de lubrification de l'arête de coupe 8 de l'outil, relié au moyen 7 de lubrification centralisée de la semelle 2 consiste essentiellement, d'une part, en un dispositif de raccordement 111 relié, d'une part, à un conduit perpendiculaire 73 du moyen 7 de lubrification centralisée de la semelle 2 (figure 1) et, d'autre part, à un conduit longitudinal 112 prévu dans le corps du porte-outils 101 et prolongé verticalement, du côté opposé au dispositif de raccordement 111 par un conduit vertical 113 débouchant dans une buse 114 d'arrosage de l'arête de coupe 8.

Le dispositif de raccordement 111 consiste avantageusement en un premier conduit 111' communiquant avec ou inséré dans le conduit 73 du moyen 7 de lubrification centralisé avec interposition d'un joint torique ou analogue, ce conduit 111' débouchant dans un corps 111" prolongé par un deuxième conduit 111"' pénétrant dans le conduit longitudinal 112 prévu dans le corps du porte-outils 101, l'étanchéité au niveau de cette dernière liaison étant également réalisée par un joint torique ou analogue. Ainsi, il est possible d'amener un liquide de lubrification sous haute pression à partir du centre du porte-outils directement sur l'arête de coupe 8. En outre, du fait de la liaison étanche entre le dispositif 111 et les conduits 73 et 112 par l'intermédiaire de conduits 111' et 111"' coopérant avec des joints toriques, il est possible de procéder au réglage du porte-outils par les déplacements nécessaires, tout en garantissant d'une parfait étanchéité.

De préférence, la buse 114 d'arrosage de l'arête de coupe 8 est une buse à jet plat. Cette buse peut avantageusement être réalisée sous forme d'une vis creuse pourvu d'une fente d'extrémité allongée, cette vis creuse étant collée après réglage de position dans un logement correspondant prévu à l'extrémité du conduit vertical 113 du porte-outils 1.

Ainsi, il est possible d'amener le lubrifiant de coupe au plus près de l'arête de coupe 8 de l'outil monté sur le porte-outils 1, de sorte que ce lubrifiant amené sous haute pression peut être projeté avec précision sur ladite arête de coupe, ce même dans le cas des vitesses de rotation usuelle actuellement, le jet étant particulièrement court.

Grâce à l'invention, il est possible de réaliser un outil à aléser, en particulier pour la réalisation de grands diamètres dans des grandes pièces monolithiques, permettant un positionnement parfait et fiable de l'outil, ainsi qu'un réglage très précis du balourd.

En outre, un maintien et un positionnement du porte-outils 1 sur la semelle 2 peuvent être obtenus immédiatement lors de la mise en place du porte-outils, avant son réglage, de sorte qu'une sécurité immédiate contre une fausse manoeuvre accidentelle est assurée. De plus, le blocage définitif est amélioré et une sécurité supplémentaire est assurée par la mise en oeuvre du conduit vertical 113 du dispositif de limitation de course du porte-outils 1.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention telle que définie dans les revendications.

## Revendications

1. Outil à aléser sur semelle, constitué par au moins un porte-outils (1) et par une semelle (2) de fixation sur une broche (3) de machine, munie, d'une part, d'une glissière (4) de guidage et de maintien pour ledit au moins un porte-outils (1), perpendiculairement à l'axe de ladite broche (3), par l'intermédiaire d'un ensemble (5) de guidage et de blocage et, d'autre part, d'au moins un ergot (6) de positionnement du porte-outils (1) ou d'un contrepoids (2000), le porte-outils (1) étant muni de moyens d'agrippage (101) destinés à coopérer avec l'ensemble (5) de guidage et de blocage de la glissière (4) de guidage et de maintien de la semelle de fixation (2), qui est pourvue, en outre, d'un dispositif (10) de limitation de la course du porte-outils (1) ou du contrepoids (2000),
**caractérisé en ce que** la semelle (2) comporte, en outre, un moyen (7) de lubrification centralisée de la ou des arêtes de coupe (8) du ou des porte-outils (1) montés sur ladite semelle (2), **en ce que** l'ergot (6) de positionnement du porte-outils (1) ou du contrepoids (2000) est arrangé pour être déplacé sous l'action d'un dispositif de réglage du porte-outils (1) ou du contrepoids (2000) lors de sa mise en place et revient automatiquement en position après cette mise en place et **en ce que**
chaque porte-outils (1) est muni d'un dispositif (11) de lubrification de l'arête de coupe (8) de l'outil, relié au moyen (7) de lubrification centralisée de la semelle (2).

2. Outil, suivant la revendication 1, **caractérisé en ce que** les moyens d'agrippage (101) du porte-outils consistent en des striures ou analogue en saillie par rapport à la forme générale des moyens de guidage (100) prévus sur le porte-outils (1).

3. Outil, suivant la revendication 2, **caractérisé en ce que** le matériau constitutif des moyens de guidage (100) du porte-outils (1) et les striures formant les moyens d'agrippage (101) est un matériau présentant une dureté supérieure à celle du matériau constitutif des piges fixe (5') et mobile (5") formant l'ensemble (5) de guidage et de blocage de la glissière (4).

4. Outil, suivant la revendication 1, **caractérisé en ce que** le dispositif (10) de limitation de la course du porte-outils (1) ou du contrepoids (2000) consiste, d'une part, en une rainure latérale (10') prévue sur un épaulement latéral du porte-outils (1) s'appuyant sur un bord de la semelle (2) délimitant la glissière (4) et, d'autre part, en une rondelle (10") ou une plaquette fixée dans un logement du côté correspondant de la semelle (2) et présentant une partie en saillie par rapport au bord correspondant d'appui du porte-outils (1), cette partie en saillie coopérant avec la rainure latérale (10').

5. Outil, suivant la revendication 4, **caractérisé en ce que** la rondelle (10") ou plaquette est fixée sur la semelle (2) par l'intermédiaire d'une vis (110"').

6. Outil, suivant une des revendications 4 ou 5, **caractérisé en ce que** la rondelle (10") ou plaquette est montée sur une vis (10"') étagée présentant deux filetages inverses ou à pas différentiels et est maintenue contre une rotation par l'intermédiaire d'une goupille (1000).

7. Outil, suivant la revendication 3 combinée à l'une des revendications 5 ou 6, **caractérisé en ce que** la vis (110"') agit par son extrémité sur la pige mobile (5").

8. Outil, suivant l'une quelconque des revendications 4 ou 5 combinée à la revendication 6, **caractérisé en ce que** la rondelle (10") est montée sur le filetage inversé ou le filetage à pas différentiel de la vis (110"') avec prévision d'un décalage initial entre le fond du logement correspondant de la semelle (2) et la paroi correspondante de la rondelle (10") ou de la plaquette, de telle manière que le vissage de la vis (10"') dans la semelle (2) s'effectue avec maintien de la rondelle (10") ou de la plaquette par la goupille (1000) pour éviter sa rotation.

9. Outil, suivant la revendication 1, **caractérisé en ce que** l'ergot (6) de positionnement d'un porte-outils (1) ou d'un contrepoids (2000) est monté dans le fond de la glissière (4) de la semelle (2) avec possibilité de déplacement contre l'action d'un ressort de rappel (62) agissant sur la came (61) de déplacement de cet ergot (6).

10. Outil, suivant la revendication 1, **caractérisé en ce que** le dispositif (11) de lubrification de l'arête de coupe (8) de l'outil, relié au moyen (7) de lubrification centralisée de la semelle (2) consiste essentiellement en un dispositif de raccordement (111) relié, d'une part, à un conduit perpendiculaire (73) du moyen (7) de lubrification centralisée de la semelle (2) et, d'autre part, à un conduit longitudinal (112) prévu dans le corps du porte-outils (101) et prolongé verticalement, du côté opposé au dispositif de raccordement (111) par un conduit vertical (113) débouchant dans une buse (114) d'arrosage de l'arête de coupe (8).

11. Outil, suivant la revendication 10, **caractérisé en ce que** le dispositif de raccordement (111) consiste en un premier conduit (111') communiquant avec ou inséré dans le conduit (73) du moyen (7) de lubrification centralisé avec interposition d'un joint torique ou analogue, ce conduit (111') débouchant dans un corps (111") prolongé par un deuxième conduit (111"') pénétrant dans le conduit longitudinal (112) prévu dans le corps du porte-outils (101), l'étanchéité au niveau de cette dernière liaison étant également réalisée par un joint torique ou analogue.

12. Outil, suivant la revendication 10, **caractérisé en ce que** la buse (114) d'arrosage de l'arête de coupe (8) est une buse à jet plat.

13. Outil, suivant la revendication 12, **caractérisé en ce que** la buse (114) est réalisée sous forme d'une vis creuse pourvu d'une fente d'extrémité allongée, cette vis creuse étant collée après réglage de position dans un logement correspondant prévu à l'extrémité du conduit vertical (113) du porte-outils (1).

## Patentansprüche

1. Ausdrehwerkzeug auf einem Balken, bestehend aus mindestens einem Werkzeughalter (1) und einem Balken (2) zur Befestigung auf einer Maschinenspindel (3), versehen einerseits mit einer Gleitschiene (4) zum Führen und Halten des genannten mindestens einen Werkzeughalters (1) senkrecht zur Achse der genannten Spindel (3) mit Hilfe einer Führungs- und Blockiereinheit (5), und andererseits mit mindestens einem Zapfen (6) zur Positionierung des Werkzeughalters (1) oder eines Gegengewichts (2000), wobei der Werkzeughalter (1) mit Haltemitteln (101) versehen ist, die dazu bestimmt sind, mit der Führungs- und Blockiereinheit (5) der Gleitschiene (4) zum Führen und Halten des Befestigungsbalkens (2) zusammenzuwirken, der außerdem mit einer Endanschlagsvorrichtung (10) für den Werkzeughalter (1) oder das Gegengewicht (2000) versehen ist,
**dadurch gekennzeichnet, dass** der Balken (2) außerdem ein Mittel (7) zur zentralisierten Schmierung der Schneide(n) (8) des oder der Werkzeughalter/s (1), der/die auf dem genannten Balken (2) montiert sind, aufweist, dadurch, dass der Positionierungszapfen (6) des Werkzeughalters (1) oder des Gegengewichts (2000) dafür eingerichtet ist, bei seiner Positionierung unter der Wirkung einer Einstellvorrichtung des Werkzeughalters (1) oder des Gegengewichts (2000) verschoben zu werden und nach dieser Positionierung automatisch wieder in seine Stellung zurückkehrt, und dadurch, dass
jeder Werkzeughalter (1) mit einer Vorrichtung (11) zur Schmierung der Schneide des Werkzeugs versehen ist, die mit dem Mittel zur zentralisierten Schmierung (7) des Balkens (2) verbunden ist.

2. Ausdrehwerkzeug nach Patentanspruch 1, **dadurch gekennzeichnet, dass** die Haltemittel (101) des Werkzeughalters in Rippen oder Ähnlichem bestehen, die aus der allgemeinen Form der Führungsmittel (100), die am Werkzeughalter (1) vorgesehen sind, herausragen.

3. Ausdrehwerkzeug nach Patentanspruch 2, **dadurch gekennzeichnet, dass** der Werkstoff, aus dem die Führungsmittel (100) des Werkzeughalters (1) und die Rippen, die die Haltemittel (101) bilden, bestehen, ein Werkstoff ist, der eine größere Härte aufweist, als der Werkstoff, aus dem die festen (5') und beweglichen Stäbe (5") bestehen, die das Führungs- und Blockiermittel (5) der Gleitschiene (4) bilden.

4. Ausdrehwerkzeug nach Patentanspruch 1, **dadurch gekennzeichnet, dass** die Endanschlagsvorrichtung (10) für den Werkzeughalter (1) oder das Gegengewicht (2000) aus einerseits einer seitlichen Rille (10'), die in einer seitlichen Schulter des Werkzeughalters (1), die an einem Rand des Balkens (2) anliegt, der die Gleitschiene (4) begrenzt, besteht und andererseits einer in einer Aufnahme der entsprechenden Seite des Balkens (2) befestigten und ein gegenüber dem entsprechenden Anlagerand des Werkzeughalters (1) hervorstehendes Teil aufweisenden Scheibe (10") oder Plättchen, wobei dieser hervorstehende Teil mit der seitlichen Rille (10') zusammenwirkt.

5. Ausdrehwerkzeug nach Patentanspruch 4, **dadurch gekennzeichnet, dass** die Scheibe (10") oder das Plättchen über eine Schraube (10"') am Balken (2) befestigt wird.

6. Ausdrehwerkzeug nach einem der Patentansprüche 4 oder 5, **dadurch gekennzeichnet, dass** die Scheibe (10") oder das Plättchen auf einer abgesetzten Schraube (10"') montiert ist, die zwei gegenläufige Gewinde oder Gewinde mit unterschiedlicher Ganghöhe aufweist und mit Hilfe eines Stiftes (1000) drehfest gehalten wird.

7. Ausdrehwerkzeug nach Patentanspruch 3 in Kombination mit einem der Patentansprüche 5 oder 6, **dadurch gekennzeichnet, dass** die Schraube (10"') mit ihrem Ende auf den beweglichen Stab (5") einwirkt.

8. Ausdrehwerkzeug nach einem der Patentansprüche 4 oder 5 in Kombination mit Patentanspruch 6, **dadurch gekennzeichnet, dass** die Scheibe (10") auf dem gegenläufigen Gewinde oder Gewinde mit unterschiedlicher Ganghöhe der Schraube (10"') montiert ist, wobei ein anfänglicher Versatz zwischen dem Boden der entsprechenden Aufnahme des Balkens (2) und der entsprechenden Seite der Scheibe (10") oder des Plättchens vorgesehen wird, derart, dass das Schrauben der Schraube (10"') im Balken (2) unter Festhalten der Scheibe (10") oder des Plättchens durch den Stift (1000) zur Vermeidung ihrer Drehung erfolgt.

9. Ausdrehwerkzeug nach Patentanspruch 1, **dadurch gekennzeichnet, dass** der Positionierungszapfen (6) eines Werkzeughalters (1) oder eines Gegengewichts (2000) am Boden der Gleitschiene (4) des Schlittens (2) mit der Möglichkeit zur Verschiebung gegen die Wirkung einer Rückstellfeder (62) montiert ist, die auf den Nocken (61) zur Verschiebung dieses Zapfens (6) einwirkt.

10. Ausdrehwerkzeug nach Patentanspruch 1, **dadurch gekennzeichnet, dass** die Vorrichtung (11) zur Schmierung der Schneide (8) des Werkzeugs, die mit dem Mittel zur zentralisierten Schmierung (7) des Balkens (2) verbunden ist, im Wesentlichen aus einer Anschlussvorrichtung (111) besteht, die einerseits mit einer senkrechten Leitung (73) des Mittels zur zentralisierten Schmierung (7) des Balkens (2) verbunden ist und andererseits mit einer in Längsrichtung verlaufenden Leitung (112), die im Körper des Werkzeughalters (101) vorgesehen ist und sich vertikal auf der der Anschlussvorrichtuing (111) entgegengesetzten Seite in einer vertikalen Leitung (113) fortsetzt, die in einer Düse (114) zur Begiessung der Schneide (8) mündet.

11. Ausdrehwerkzeug nach Patentanspruch 10, **dadurch gekennzeichnet, dass** die Anschlussvorrichtung (111) aus einer ersten Leitung (111') besteht, die mit der Leitung (73) des Mittels zur zentralisierten Schmierung (7) unter Einfügung einer O-Ringdichtung oder dergleichen in Verbindung steht oder in sie eingesetzt ist, wobei diese Leitung (111') in einen Körper (111") mündet, der sich in einer zweiten Leitung (111"') fortsetzt, die in die Leitung in Längsrichtung (112) einmündet, die im Körper des Werkzeughalters (101) vorgesehen ist, wobei die Dichtigkeit dieser letzten Verbindung ebenfalls durch eine O-Ringdichtung oder dergleichen sichergestellt wird.

12. Ausdrehwerkzeug nach Patentanspruch 10, **dadurch gekennzeichnet, dass** die Düse (114) zur Schmierung der Schneide (8) eine Flachstrahldüse ist.

13. Ausdrehwerkzeug nach Patentanspruch 12, **dadurch gekennzeichnet, dass** die Düse (114) in Form einer hohlen Schraube ausgebildet ist, die an ihrem Ende mit einem länglichen Schlitz versehen ist, wobei diese hohle Schraube nach Justieren der Stellung in eine entsprechende Aufnahme geklebt wird, die am Ende der vertikalen Leitung (113) des Werkzeughalters (1) vorgesehen ist.

## Claims

1. A boring tool on a flange made up of at least one tool holder (1) and at least one fastening flange (2) on a machine broach (3) fitted, on the one hand, with a slide (4) for guiding and holding at least one tool holder (1) perpendicular to the axis of the broach (3) by the intermediary of a guiding and clamping assembly (5) and, on the other hand, of at least one positioning lug (6) of a tool holder (1) or of counterweight (2000), the tool holder (1) being fitted with means of gripping (101) designed to cooperate with the guiding and clamping assembly (5) of the slide (4) for guiding and holding the fastening flange (2), which is provided in addition, with a device (10) for limiting the travel of tool holder (1) or of counterweight (2000),
**characterized in that** the fastening flange (2) further comprises a means (7) of centralized lubrication for cutting edge(s) (8) of tool holder(s) (1) mounted on said flange (2),
and **in that** the positioning lug (6) of the tool holder (1) or of the counterweight (2000) is disposed to be displaced upon the action of an adjustment device for a tool holder (1) or a counterweight (2000) during its placement and returns automatically into position after this placement, and **in that** each tool holder (1) is fitted with a device (11) for lubrication cutting edge (8) of the tool, coupled to the means (7) of centralized lubrication for flange (2).

2. Tool according to claim 1, **characterized in that** the gripping means (101) of the at least one tool holder includes corrugations or similar projections relative to a general form of a guide portion (100) provided on the at least one tool holder.

3. Tool according to claim 2, **characterized in that** the constituent material of the guide portion (100) of the at least one tool holder (1) and the corrugations forming gripping surface (101) is a material exhibiting a hardness greater than that of constituent material of fixed (5') and movable (5") gauges forming the guiding and clamping assembly (5) of the slide (4).

4. Tool according to claim 1, **characterized in that** the device (10) limiting the travel of tool holder (1) or of counterweight (2000) consists, on the one hand, of a side groove (10') provided on a side shoulder of a tool holder (1) leaning against an edge of the at least one fastening flange (2) demarcating the slide (4) and, on the other hand, of a washer (10") or a small flange fastened in a slot on a corresponding side of the at least one fastening flange (2) and exhibiting a part projecting relative to a corresponding support edge of the at least one tool holder (1), the projecting part engaging the side groove (10').

5. Tool according to claim 4, **characterized in that** the washer (10") or the small flange is fastened onto the at least one fastening flange (2) by an intermediary of a stagger screw (10").

6. Tool according to claim 4 or 5, **characterized in that** the washer (10") or the small flange is mounted on the stagger screw (10"') exhibiting two threads, reverse or variable-pitch, and is kept from rotating by an intermediary of a cotter pin (1000).

7. Tool according to claim 3 combined to at least one of the claims 5 or 6, **characterized in that** the stagger screw (10"') acts on the movable gauge (5") by means of its end.

8. Tool according to at least one of the claims 4 or 5 combined to claim 6, **characterized in that** the washer (10") is mounted on the reverse threads or the variable-pitch threads of the stagger screw (10"') with provision of an initial offset between a base of the corresponding slot of the at least one fastening flange (2) and a corresponding wall of the washer (10"') or of the small flange, in such a way that the stagger screw (10"') is screwed into the at least one fastening flange (2) while holding the washer (10") or the small flange by the cotter pin (1000) to keep it from rotating.

9. Tool according to claim 1, **characterized in that** the positioning lug (6) of the at least one tool holder (1) or of the counterweight (2000) is mounted on a base of the slide (4) of the at least one fastening flange (2) with a possibility of displacement against an action of a backing spring (62) acting on a displacement cam (61) of the positioning lug (6).

10. Tool according to claim 1, **characterized in that** the lubricating device (11) for the cutting edge (8) of the boring tool, coupled to the centralized lubrication pathway (7) for the at least one fastening flange (8) includes a connection device (111) coupled to a perpendicular conduit (73) of the centralized lubrication pathway (7) for the at least one fastening flange (2) and to a longitudinal conduit (112) provided in the body of the at least one tool holder (101) and extended vertically, on an opposite side of the connection device (111) by a vertical conduit (113) emerging into a coolant duct (114) for the cutting edge (8).

11. Tool according to claim 10, **characterized in that** the connection device (111) includes a first conduit (111') communicating with or inserted into the perpendicular conduit (73) of the centralized lubrication pathway (7) with interposition of an O-ring or similar, the first conduit (111') emerging into a body (111") extended by a second conduit (111"') penetrating into a longitudinal conduit (112) provided in the body of the at least one tool holder (101), the tightness at this connection point being made with interposition of an O-ring or similar.

12. The boring tool according to claim 10, **characterized in that** the coolant duct (114) for the cutting edge (8) is a flat-jet duct.

13. The boring tool according to claim 12, **characterized in that** the flat-jet duct (114) is executed in the form of an Allen screw provided for a slit with a lengthened end, the Allen screw being stuck after position adjustment in a corresponding slot provided at an end of the vertical conduit (113) of the at least one tool holder (1).
